# EUROPÄISCHE PATENTSCHRIFT

(11) **EP 1 465 223 B1**
(45) Veröffentlichungstag und Bekanntmachung des Hinweises auf die Patenterteilung: **04.05.2011**
(21) Anmeldenummer: 04007605.1
(22) Anmeldetag: 30.03.2004
(51) Int. Cl.: H01H 27/00, G06K 7/00, G06K 13/067, B60R 25/00

(54) **Anordnung zum Betätigen eines elektrischen Schalters**
Device for operating an electrical switch
Dispositif d'actionnement d'un interrupteur

(30) Priorität: 01.04.2003 DE 10314632
(43) Veröffentlichungstag der Anmeldung: 06.10.2004
(73) Patentinhaber: Leopold Kostal GmbH & Co. KG, 58507 Lüdenscheid (DE)
(72) Erfinder: Riehle, Jürgen, 44388 Dortmund (DE); Donner, Harald, 58540 Meinerzhagen (DE); Braeker, Tobias, 58313 Herdecke (DE)

(56) Entgegenhaltungen:
- EP-A1- 1 026 054
- EP-A2- 1 462 325
- DE-A1- 19 853 075
- DE-A1- 19 939 733
- DE-C1- 19 504 991

## Beschreibung

Die Erfindung betrifft eine Anordnung zum Betätigen eines elektrischen Schalters, umfassend eine Karte, ausgebildet als Codeträger oder als Dummy, sowie eine Einrichtung mit einem Kartenfach zum Aufnehmen einer solchen Karte, wobei das Kartenfach um eine parallel zu einer Flachseite der Karte verlaufende Drehachse schwenkbar gelagert ist und eine Schalterbetätigung durch Verschwenken des Kartenfaches um seine Drehachse erfolgt und dass die Einrichtung über eine beim Durchführen einer Schaltbewegung durch Bewegen des Kartenfaches eine Schalthaptik bereitstellende Anordnung verfügt.

Derartige Anordnungen werden bei Kraftfahrzeugen zum Abfragen einer Nutzungsberechtigung, insbesondere zur Inbetriebnahme des Kraftfahrzeuges eingesetzt. Dabei kann die Karte als elektronischer Schlüssel mit einem Nutzungsberechtigungscode ausgebildet sein. Die Einrichtung zum Aufnehmen eines solchen elektronischen Schlüssels ist dann als Lesegerät zum Auslesen des elektronischen Nutzungsberechtigungscodes einer solchen Karte ausgelegt. Ein solcher Nutzungsberechtigungscode kann in einem nicht flüchtigen Speicher abgelegt sein; eingesetzt werden auch andere elektronische Codierungen, die beispielsweise durch einen Transponder oder dergleichen bereitgestellt werden können. Zum Auslesen bzw. Abfragen des Nutzungsberechtigungscodes dient ein kraftfahrzeugseitig installiertes Lesegerät, in das die Karte zum Abfragen des Nutzungsberechtigungscodes einzulegen ist. Zu diesem Zweck verfügt das Lesegerät über ein Kartenfach mit einem stromlos arbeitenden Einzugmechanismus, um mit diesem die Karte nach einem anfänglichen manuellen Einschieben in ihre bestimmungsgemäße Position zu bringen und um diese darin zu verriegeln, solange das Kraftfahrzeug in Betrieb ist. Somit handelt es sich bei der beschriebenen Ausgestaltung um eine Einrichtung, die als elektronischer Zündanlassschalter eingesetzt ist. Ferner sind Systeme bekannt, bei denen ein solcher elektronischer Schlüssel über eine Funkstrecke mit einer kraftfahrzeugseitigen Sende-Empfangseinrichtung kommuniziert. In dem Zündanlassschalter ist in diesen Fällen im allgemeinen eine Dummy-Karte als Teil der Anordnung eingelegt. Grundsätzlich ist die Dummy-Karte aus dem Kartenfach entnehmbar, damit der elektronische Schlüssel in das Kartenfach eingelegt werden kann, um über eine andere Kommunikationsstrecke - eine IR-Strecke - systemseitig den Nutzungsberechtigungscode dieses Schlüssels abfragen zu können, für den Fall, dass eine Kommunikation über die Funkstrecke nicht möglich ist.

Mit dem Einlegen der Karte und ihrem Einzug in das Kartenfach wird ein elektrischer Schalter betätigt, um systemseitig zu erkennen, dass eine Karte sich im Kartenfach befindet. Ferner verfügt eine solche vorbekannte Anordnung über einen Schalter zum Starten des Motors. Dieser Schalter kann an unterschiedlichen Positionen im Kraftfahrzeug angeordnet sein. Um diese vorbekannte Anordnung in einem Kraftfahrzeug zu installieren, ist sowohl die die Karte aufnehmende Einrichtung als auch der Starterknopf zu installieren.

Die DE 195 04 991 C1 offenbart eine Anordnung zum Betätigen eines elektrischen Schalters gemäß dem Oberbegriff des Patentanspruchs 1. Es handelt sich dabei um einen Startschalter für ein Kraftfahrzeug, der als Drehgriff ausgebildet ist, in dem sich ein Kartenschacht für eine Identifizierungskarte befindet.

Ausgehend von dem diskutierten Stand der Technik liegt der Erfindung die Aufgabe zugrunde, eine eingangs genannte gattungsgemäße Anordnung, insbesondere für die beschriebene Automotiv-Anwendung geeignet, dergestalt weiterzubilden, dass nicht nur durch eine Reduzierung der notwendigen individuell zu installierenden Elemente ein Einbau vereinfacht ist, sondern mit der ebenfalls handhabungstechnische Vorteile erzielt werden.

Diese Aufgabe wird erfindungsgemäß dadurch gelöst, dass die Drehachse quer zur Längsachse des Kartenfachs verläuft, und dass die Karte nach ihrem Einlegen in das Kartenfach gleichzeitig als Handhabe zum Bewegen desselben dient.

Bei dieser Anordnung kommt dem Kartenfach nicht nur die ihm zugedachte Funktion einer Kartenaufnahme zu, sondern das Kartenfach dient gleichfalls als Betätigungselement zum Betätigen eines elektrischen Schalters, wobei es sich bei diesem elektrischen Schalter auch um eine Schalteranordnung handeln kann. Das Kartenfach ist zu diesem Zweck schwenkbar gelagert. Bewegt werden kann das Kartenfach beispielsweise durch eine in das Kartenfach eingelegte und mit ihrem rückseitigen Abschnitt aus dem Kartenfach herausragende Karte. Die Einrichtung verfügt ferner über eine eine Schalthaptik beim Verschwenken des Kartenfaches bereitstellende Anordnung, damit einem Benutzer ein bestimmtes Schaltgefühl vermittelt werden kann. Gegenüber gattungsgemäßen vorbekannten Anordnungen ist die Handhabung der Einrichtung dieser Anordnung vereinfacht, da nur ein einziges Element zu handhaben ist, nämlich die Karte, die nach ihrem Einlegen in das Kartenfach gleichzeitig als Handhabe zum Auslösen eines Startvorganges bei Einbau einer solchen Anordnung in einem Kraftfahrzeug dient. Insofern kommt der Karte - unabhängig davon, ob es sich bei dieser Karte um einen Codeträger oder um einen Dummy handelt - die Funktion eines herkömmlichen Zündschlüssels eines Kraftfahrzeuges zu. Ein Nutzer einer solchen Einrichtung braucht sich daher grundsätzlich nicht umzugewöhnen, wenn er gewohnt war, das Kraftfahrzeug mit einem herkömmlichen Zündschlüssel zu starten.

Die Drehachse des Kartenfaches befindet sich zweckmäßigerweise im einsteckseitig hinteren Bereich einer in das Kartenfach eingelegten Karte. Somit ist das aus dem Kartenfach zweckmäßigerweise zur Handhabung der Karte herausragende freie Ende nach Art eines Betätigungshebels verschwenkbar. Zum Bereitstellen einer Schalthaptik kann ein in einer Rastkurve geführter Rastbolzen dienen. Zweckmäßigerweise ist die Rastkurve ortsfest gegenüber einer Bewegung des Kartenfaches und des Rastbolzens an eine Bewegung des Kartenfaches gekoppelt und kann den einen Hebelarm einer gemeinsam mit dem Kartenfach ausgebildeten Wippe darstellen. Gleichwohl kann grundsätzlich auch vorgesehen sein, den Rastbolzen ortsfest und die Rastkurve an eine Schaltbewegung des Kartenfaches zu koppeln.

In einem Ausführungsbeispiel ist der Rastbolzen schwenkbar an dem Kartenfach angelenkt, und zwar um eine Drehachse, die rechtwinklig zur Schwenkachse des Kartenfaches und ebenfalls rechtwinklig zu einer Flachseite einer in das Kartenfach eingelegten Karte angeordnet ist. Einem solchen Rastbolzen sind ein oder auch mehrere, beispielsweise zwei Stellhebel zugeordnet, durch die der Rastbolzen in die eine oder in die andere Rastbolzenstellung gebracht werden kann, ohne dass zu diesem Zweck das Kartenfach bewegt wird. Die Stellhebel können in das Kartenfach hinein ragen und sind in diesem Fall zweckmäßigerweise durch die einsteckseitige Stirnseite einer in das Kartenfach einzulegenden Karte betätigbar. Durch unterschiedliche Codierung der einsteckseitigen Stirnseite - beispielsweise durch unterschiedliche Konturierung mehrerer Karten - kann in Abhängigkeit von der eingelegten Karte der Rastbolzen in die eine oder in die andere Stellung gebracht werden. Jede dieser Rastbolzenstellungen stellen eine erste Schaltstellung in jeweils einer eigenen Rastkurve dar, in der der Rastbolzen bei einer Schaltbewegung des Kartenfaches geführt wird. Die einzelnen Rastkurven sind unterschiedlich ausgestaltet sein, so dass in Abhängigkeit von der in das Kartenfach eingelegten Karte einem Nutzer beim Durchführen des Schaltvorganges durch Bewegen des Kartenfaches eine unterschiedliche Schalthaptik vermittelt wird. Beispielsweise kann die eine Rastkurve durch zwei stabile Schaltstellungen und einer damit einhergehenden Haptik gekennzeichnet sein, während in der anderen Rastkurve das Kartenfach bezüglich der von dieser auszuführenden Schaltbewegung lediglich monostabil gehalten ist und somit das Kartenfach zum Ausüben einer Tastbewegung konzipiert ist. Eine solche Unterscheidung kann benutzer- oder auch kartenabhängig eingerichtet werden; im letzteren Falle kann beispielsweise eine in das Kartenfach eingelegte Dummy-Karte den Rastbolzen in eine Rastbolzenstellung bringen, dass dieser in eine Rastkurve eingreift, die lediglich eine monostabile Lagerung des Kartenfaches gewährleistet, während bei Einlegen einer als Codeträger ausgebildeten Karte das Kartenfach beispielsweise in zwei stabile Schaltstellungen schaltbar ist. Ein solches Kartenfach ist als mechanisches Flip-Flop arbeitend ausgelegt.

Zur Verriegelung einer in das Kartenfach eingelegten Karte in seiner Schaltstellung, die insbesondere als stabile Schaltstellung ausgelegt ist, können in die in Einsteckrichtung in das Kartenfach weisenden Schmalseiten einer Karte Verriegelungsaussparungen eingebracht sein. In diese Verriegelungsaussparungen greifen aus seiner Null-Stellung heraus bei verschwenktem Kartenfach ortsfest zur Schwenkbewegung des Kartenfaches angeordnete Sperrbolzen ein, so dass eine Endnahme der Karte in dieser Stellung des Kartenfaches verhindert ist.

In einer Ausgestaltung dieser Anordnung ist die in das Kartenfach einzulegende Karte im Querschnitt einseitig spiegelsymmetrisch zur Kartenebene verdickt. Um auch bei einer solchen Karte eine bestimmungsgemäße Führung der Karte in dem Kartenfach bereitzustellen, sind in einem Ausführungsbeispiel dem Kartenfach zwei seitliche, den Flachseiten der Karte zugeordnete Führungen mit jeweils einer der Dicke der Karte in ihrem dünneren Bereich entsprechenden lichten Weite aufweisenden Führungsnut zugeordnet. Da beide Führungen eine solche Führungsnut aufweisen, kann die Karte grundsätzlich unabhängig von ihrer Orientierung in das Kartenfach eingeschoben werden. Der übrige Bereich der Führungen, die zweckmäßigerweise einen gemeinsamen Schacht ausbilden, ist in seiner lichten Weite auf die Stärke der Karte in ihrem dickeren Abschnitt abgestimmt. Damit der dünnere Bereich der Karte unabhängig von der Orientierung der Karte bestimmungsgemäß in eine der beiden dünneren Führungsnuten eingeführt wird, ist es zweckmäßig, einführseitig den Führungen Einführschrägen zuzuordnen, die mit dem dickeren Bereich der Karte zusammenwirken und somit die Karte mit ihrem dünneren Kartenende in die zur Aufnahme dieses Kartenabschnittes vorgesehene Führungsnut eindrücken. Bei einer solchen Ausgestaltung sind die zum Verriegeln der Karte in dem Kartenfach vorgesehenen Sperrbolzen mit ihrer zur Karte weisenden Oberfläche gestuft ausgebildet, um den beiden unterschiedlichen Kartenorientierungen gerecht zu werden.

Nachfolgend ist die Erfindung anhand eines Ausführungsbeispiels unter Bezugnahme auf die beigefügten Figuren beschrieben. Es zeigen:
- **Fig. 1:**: eine schematisierte perspektivische und zum Teil geschnittene Darstellung einer Anordnung zum Betätigen eines elektrischen Schalters,
- **Fig. 2:**: eine geschnittene Unteransicht in das Kartenfach der Einrichtung der Figur 1 mit eingelegter Karte,
- **Fig. 3:**: die Darstellung der Figur 2 mit einer anderen, in das Kartenfach eingelegten Karte,
- **Fig.4:**: eine geschnittene Frontansicht in das Kartenfach der Einrichtung der Anordnung der Figur 1 ohne darin eingelegte Karte und
- **Fig. 5:**: die Darstellung der Figur 4 mit in das Kartenfach eingelegter Karte.

Eine in den Figuren insgesamt mit dem Bezugszeichen 1 gekennzeichnete Anordnung dient bei dem dargestellten Ausführungsbeispiel als elektronischer Zündanlassschalter eines Kraftfahrzeuges. Die Anordnung 1 umfasst eine als Schalteinrichtung 2 bezeichnete Einrichtung mit einem Kartenfach 3. Weiterer Teil der Anordnung 1 ist eine erste Karte 4, die als Codeträger ausgebildet ist. Die Karte 4 verfügt über Sende- und Empfangsmittel zum Durchführen einer Kommunikation mit einer kraftfahrzeugseitigen Sende-Empfangseinrichtung zum Abfragen einer Nutzungsberechtigung der Karte 4 auf einer Funkstrecke. Die Karte 4 umfasst ferner einen Infrarot-Sender zum Senden des Nutzungsberechtigungscodes, wenn die Karte 4 in das Kartenfach 3 eingelegt ist. Zu diesem Zweck verfügt die Schalteinrichtung 2 über einen nicht näher dargestellten Infrarotempfänger.

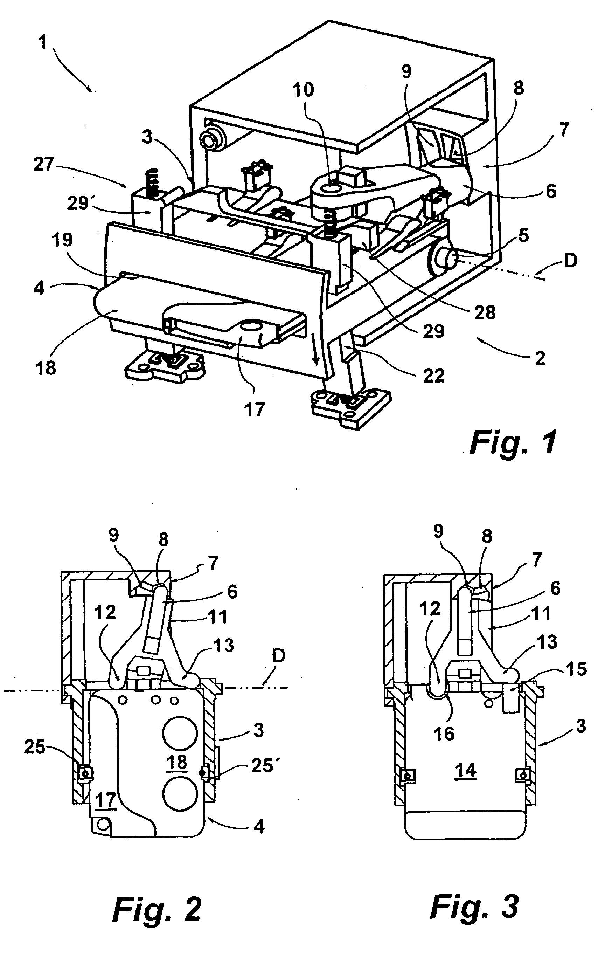

Das Kartenfach 3 der Schalteinrichtung 2 verfügt über zwei einander diametral gegenüberliegende Lagerzapfen 5, so dass das Kartenfach 3 um die Drehachse D dieser Lagerzapfen 5 verschwenkbar ist. Figur 1 zeigt die Schalteinrichtung 2 in ihrer Null-Stellung, von der ausgehend das Kartenfach 3 der Pfeilrichtung in Figur 1 entsprechend nach unten verschwenkt werden kann. Durch diese Verschwenkbewegung des Kartenfaches 3 wird in nicht näher dargestellter Art und Weise ein Schalter zum Herbeiführen des Startvorganges des Motors des Kraftfahrzeuges betätigt. Betätigt wird die Schalteinrichtung 2 mit dem aus dem Kartenfach 3 herausragenden Endabschnitt der Karte 4.

In dem Kartenfach 3 ist ein Rastbolzen 6 angeordnet, der in eine Rastkulisse 7 eingreift. Die Rastkulisse 7 verfügt über zwei nebeneinander liegende Rastkurven 8, 9. In der in Figur 1 gezeigten Stellung des Rastbolzens 6 greift dieser in die Rastkurve 8 der Rastkulisse 7 ein. Der Rastbolzen 6 ist an eine Schaltbewegung des Kartenfaches 3 gekoppelt und bildet zusammen mit dem Kartenfach 3 eine Wippe aus, wobei der Rastbolzen 6 den einen Hebelarm und das Kartenfach zusammen mit der endseitig aus dem Kartenfach 3 herausragenden Karte 4 den anderen Hebelarm bilden. Der Rastbolzen 6 ist in der Ebene des Kartenfaches 3 zwischen zwei Stellungen verschwenkbar. Die Schwenkachse ist in Figur 1 mit dem Bezugszeichen 10 gekennzeichnet.

An dem den eigentlichen Rastbolzen 6 aufnehmenden Gehäuse 11 sind zwei Stellhebel 12, 13 angeformt, die mit ihrem freien Ende in das Kartenfach 3 hineinragen. Diese ragen soweit in das Kartenfach 3 hinein, dass in Abhängigkeit von der Stellung des Rastbolzens 6 der eine oder der andere Stellhebel 12 bzw. 13 mit der einsteckseitigen Stirnseite einer eingelegten Karte, beispielsweise der Karte 4 betätigt werden kann. Durch eine solche Betätigung ist der Rastbolzen 6 in der Ebene des Kartenfaches 3 verschwenkbar, um beispielsweise mit der Karte 4 in seine in den Figuren 1 und 2 gezeigte Position gebracht werden zu können. Befindet sich beispielsweise der Rastbolzen 6 vor einem Einlegen der Karte 4 in seiner anderen Rastbolzenstellung, bei der der Rastbolzen 6 in die Rastkurve 9 der Rastkulisse 7 eingreift, ragt der Stellhebel 12 mit seinem freien Ende entsprechend weiter in das Kartenfach 3 ein, so dass dann beim Vorgang des Einschiebens der Karte 4 in das Kartenfach 3 durch die Anschlaganordnung zwischen der einsteckseitigen Stirnseite der Karte 4 und dem freien Ende des Stellhebels 12 der Rastbolzen 6 innerhalb der Rastkulisse 7 verschwenkt wird, bis dieser in die Rastkurve 8 eingreift. Die Rastkurve 8 ist bei dem dargestellten Ausführungsbeispiel zum Halten des Kartenfaches 3 in zwei stabilen Schaltstellungen ausgelegt.

Für den Fall, dass die Karte 4 von einem Benutzer des Kraftfahrzeuges mitgeführt wird und diese zum Starten des Kraftfahrzeuges nicht in das Kartenfach 3 der Schalteinrichtung 2 eingeführt werden soll, kann in das Kartenfach 3 der Schalteinrichtung 2 eine Dummy-Karte 14 eingeführt werden, um den gewünschten Startvorgang auszulösen. Die Dummy-Karte 14 kann bei einer solchen Nutzung des Kraftfahrzeuges grundsätzlich in dem Kartenfach verbleiben. Es ist vorgesehen, dass bei in dem Kartenfach enthaltener Dummy-Karte 14 ein Startvorgang des Kraftfahrzeuges tastend ausgelöst wird. Zu diesem Zweck ist die einsteckseitige Stirnseite der Dummy-Karte 14 dergestalt konturiert, dass beim Einschieben der Dummy-Karte 14 in das Kartenfach 3 der Rastbolzen 6 in die Rastkurve 9 der Rastkulisse 7 gebracht wird, sollte sich der Rastbolzen 6 nicht bereits in dieser Rastkurve 9 befinden. Die Dummy-Karte 14 verfügt zu diesem Zweck über einen Fortsatz 15, der konzipiert ist, um zur Anlage an dem freien Ende des Stellhebels 13 des Gehäuses 11 des Rastbolzens 6 zu gelangen. Durch die Anschlaganordnung zwischen diesem Fortsatz 15 und dem Stellhebel 13 erfolgt eine Verschwenkung des Rastbolzens 6 aus seiner in Figur 2 gezeigten Stellung in seine in Figur 3 gezeigten Stellung. Damit das freie Ende des Stellhebels 12 diesen Verschwenkvorgang nicht behindert, verfügt die Dummy-Karte 14 an entsprechender Stelle über eine Ausnehmung 16, in die das freie Ende des Stellhebels 12 einschwenken kann. Die einsteckseitige Stirnseite der Dummy-Karte 14 ist mittenspiegelsymmetrisch konzipiert, damit diese unabhängig von ihrer Orientierung in das Kartenfach 3 eingeführt werden kann. Durch den in die Rastkurve 9 eingreifenden Rastbolzen 6 ist das Kartenfach 3 monostabil gelagert, so dass beim Durchführen einer Schaltbewegung mit dem Kartenfach 3 der Rastbolzen 6 entlang einer Rastschräge geführt wird, bei der im Gegensatz zur Rastkurve 8 keine zweite stabile Raststellung erreicht wird.

Die als Codeträger ausgebildete Karte 4 ist im Querschnitt spiegelsymmetrisch zur Ebene der Karte 4 einseitig verdickt ausgebildet. Die Karte 4 umfasst somit einen im Querschnitt dickeren Abschnitt 17 und einen im Querschnitt dünneren Abschnitt 18. Um eine bestimmungsgemäße Führung der Karte 4 in dem Kartenfach 3 unabhängig von der Orientierung der in das Kartenfach 3 eingelegten Karte 4 - d. h. unabhängig davon, ob sich der dickere Abschnitt 17, wie in Figur 1 dargestellt, rechts oder aber links befindet - verfügt das Kartenfach 3 über entsprechend konzipierte Führungen. Die Führung wird insgesamt durch einen Schacht 19 realisiert, dessen Höhe zur Führung der Karte 4 in ihrem dikkeren Abschnitt 17 dient. Die beiden parallel zur Längsachse des Kartenfaches 3 verlaufenden Seiten umfassen jeweils eine Führungsnut 20, 20', deren Höhe geringer ist als die lichte Höhe des Schachtes 19 und der Dicke des dünneren Abschnitts 18 der Karte 4 entspricht. Je nach Orientierung einer in das Kartenfach 3 eingelegten Karte 4 grenzt der Rücken des dickeren Abschnittes 17 an die die Führungsnut 20 bzw. 20' von den weiteren Bereichen des Schachtes 19 trennende Fläche 21 bzw. 21'. Durch diese Anlage greift der dünnere Abschnitt 17 in die gegenüberliegende Führungsnut 20' bzw. 20 ein. Die Führungsnuten 20, 20' weisen einsteckseitig jeweils eine Einführschräge auf, so dass je nach Orientierung der in das Kartenfach 3 einzulegenden Karte 4 der dünnere Abschnitt 18 in die Führungsnut 20 oder in die Führungsnut 20' ohne weiteres eingeführt wird.

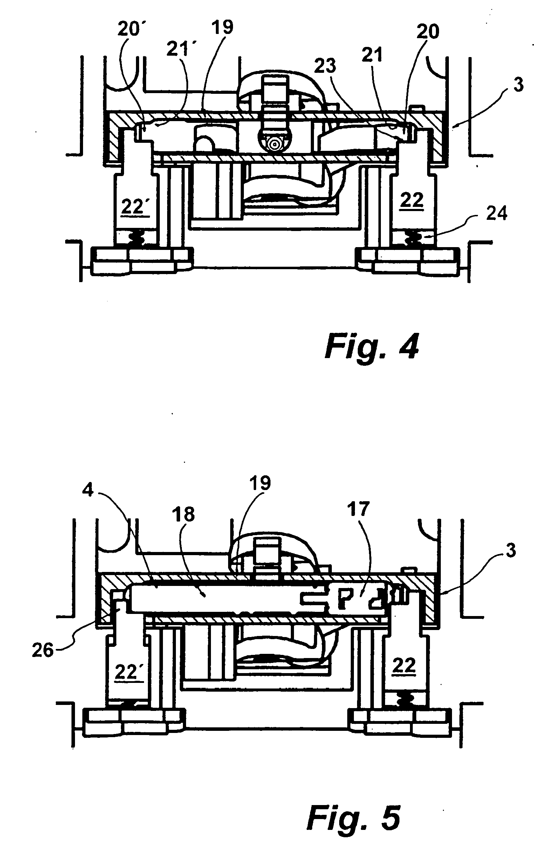

Figur 4 zeigt das Kartenfach 3 in seiner gegenüber der in Figur 1 gezeigten Null-Stellung verschwenkten Schaltstellung. In dieser Stellung greifen in das Kartenfach 3 zwei Sperrbolzen 22, 22' ein, durch die eine in das Kartenfach 3 eingelegte Karte 4, 14 in dieser Stellung des Kartenfaches verriegelt in dem Kartenfach 3 gehalten ist. Die Sperrbolzen 22 und 22' sind gleichartig aufgebaut. Die nachfolgende Beschreibung erfolgt anhand des Sperrbolzens 22. Der Sperrbolzen 22 weist eine gestuft ausgebildete Oberseite 23 auf, um der unterschiedlichen Dicke der Karte 4 unabhängig von ihrer Orientierung beim Einlegen in das Kartenfach 3 begegnen zu können. Der Sperrbolzen 22 ist unterseitig durch eine Druckfeder 24 abgestützt, so dass der Sperrbolzen 22 gegen die Kraft der Druckfeder 24 bewegt werden kann. In der in Figur 4 gezeigten Stellung der Sperrbolzen 22, 22' wird in dieser Stellung eine in das Kartenfach eingelegte Karte verriegelt, die an ihren beiden Längsseiten eine Dicke aufweist, die dem dünneren Abschnitt 18 der Karte 4 entspricht. Dieses ist beispielsweise bei der Dummy-Karte 14 der Fall, die zu diesem Zweck auch etwas breiter ausgebildet ist als die Karte 4 (vgl. auch Figur 3).

Zum Verriegeln der Karten 4, 14 in dem Kartenfach 3 sind in die in Einsteckrichtung weisenden Schmalseiten der Karten 4, 14 Verriegelungsaussparungen 25, 25' eingebracht, in die die Sperrbolzen 22, 22' in der in Figur 4 gezeigten Stellung des Kartenfaches 3 eingreifen, wie dies in Figur 5 anhand der in das Kartenfach 3 eingelegten Karte 4 gezeigt ist. Aufgrund der unterschiedlichen Dicke der beiden Abschnitte 17, 18 ist der Sperrbolzen 22' durch Auflage des dünneren Abschnittes 18 auf der abgestuften Oberseite des Sperrbolzens 22' gegen die Rückstellkraft der Druckfeder bewegt worden. Eine Verriegelung an dieser Seite der Karte erfolgt durch Eingreifen des die Stufe ausbildenden Fortsatzes 26 in die Verriegelungsaussparung 25'. Im Bereich des dickeren Abschnittes 17, der nicht in die Führungsnut 20 hineinragt, ist die Karte 4 durch Eingreifen des abgestuften, tieferen Abschnittes des Sperrbolzens 22 in die Verriegelungsaussparung 25 verriegelt.

Die Schalteinrichtung 2 verfügt ferner über eine in Figur 1 dargestellte Verriegelungseinrichtung 27 zum Verriegeln einer in das Kartenfach 3 eingelegten Karte 4 oder 14, wenn sich das Kartenfach 3 in seiner Null-Stellung befindet und systemseitig eine Entnahme der Karte 4 oder 14 nicht erfolgen darf, beispielsweise weil der Gangwahlhebel sich nicht in seiner Park-Stellung befindet. Diese verfügt über einen Schieber 28 mit zwei Stellschrägen, auf denen sich zwei Riegel 29, 29' mit jeweils einem Stellzapfen abstützen. Die Riegel 29, 29' sind durch den Schieber 28 in vertikaler Richtung bewegbar und greifen in der Null-Stellung des Kartenfaches 3 in die Verriegelungsaussparungen 25, 25' einer Karte 4, 14 ein, wenn sich die Verriegelungseinrichtung 27 in ihrer verriegelten Stellung befindet. Figur 1 zeigt die Verriegelungseinrichtung 27 mit abgesenkten Riegeln 29, 29' in ihrer verriegelnden Stellung. Eine Betätigung des Schiebers 28 nach links führt zu einem Anheben der Riegel 29, 29' und somit zu einer Entriegelung der Karte 4, wenn der Gangwahlhebel in die Park-Position gebracht worden ist.

In der Figurenbeschreibung ist eine Schaltkulisse beschrieben worden, deren Schaltkurven jeweils zwei Schaltstellungen beinhalten. Gleichfalls ist es möglich, jeder Schaltkurve auch mehrere Schaltstellungen zuzuordnen, beispielsweise auch solche, damit das Kartenfach ausgehend von seiner Null-Stellung in zwei Richtungen verschwenkt werden kann. In gleicher Weise ist es möglich, dass die einzelnen Schaltkurven der Schaltkulisse eine unterschiedliche Anzahl an Schaltstellungen aufweisen.

### Bezugszeichenliste

- 1: Anordnung
- 2: Schalteinrichtung
- 3: Kartenfach
- 4: Karte
- 5: Lagerzapfen
- 6: Rastbolzen
- 7: Rastkulisse
- 8: Rastkurve
- 9: Rastkurve
- 10: Schwenkachse
- 11: Gehäuse
- 12: Stellhebel
- 13: Stellhebel
- 14: Dummy-Karte
- 15: Fortsatz
- 16: Ausnehmung
- 17: dickerer Abschnitt
- 18: dünnerer Abschnitt
- 19: Schacht
- 20, 20': Führungsnut
- 21, 21': Fläche
- 22,22': Sperrbolzen
- 23: Oberseite
- 24: Druckfeder
- 25, 25': Verriegelungsaussparung
- 26: Fortsatz
- 27: Verriegelungseinrichtung
- 28: Schieber
- 29,29': Riegel

- D: Drehachse

## Patentansprüche

1. Anordnung zum Betätigen eines elektrischen Schalters, umfassend eine Karte, ausgebildet als Codeträger (4) oder als Dummy (14), sowie eine Einrichtung (2) mit einem Kartenfach (3) zum Aufnehmen einer solchen Karte (4, 14), wobei das Kartenfach (3) um eine parallel zu einer Flachseite der Karte (4, 14) verlaufende Drehachse (D) schwenkbar gelagert ist und eine Schalterbetätigung durch Verschwenken des Kartenfaches (3) um seine Drehachse (D) erfolgt und dass die Einrichtung (2) über eine beim Durchführen einer Schaltbewegung durch Bewegen des Kartenfaches (3) eine Schalthaptik bereitstellende Anordnung (6, 7) verfügt, **dadurch gekennzeichnet, dass** die Drehachse (D) quer zur Längsachse des Kartenfachs (3) verläuft, und dass die Karte (4, 14) nach ihrem Einlegen in das Kartenfach (3) gleichzeitig als Handhabe zum Bewegen desselben dient.

2. Anordnung nach Anspruch 1, **dadurch gekennzeichnet, dass** die Drehachse (D) des Kartenfaches im Bereich des einsteckseitigen Endes einer in das Kartenfach (3) eingelegten Karte (4, 14) angeordnet ist.

3. Anordnung nach Anspruch 1 oder 2, **dadurch gekennzeichnet, dass** die der Einrichtung (2) zugeordnete Anordnung zum Bereitstellen einer Schalthaptik beim Durchführen einer Schaltbewegung durch Bewegen des Kartenfaches (3) einen in eine zur Schaltbewegung des Kartenfaches (3) ortsfest angeordnete Rastkulisse (7) eingreifenden Rastbolzen (6) aufweist.

4. Anordnung nach Anspruch 3, **dadurch gekennzeichnet, dass** der Rastbolzen (6) und das Kartenfach (3) gemeinsam eine Wippe bilden, bei der der Rastbolzen (6) den einen Hebelarm und der aus Sicht der Einstecköffnung des Kartenfaches (3) vor der Drehachse befindliche Abschnitt des Kartenfaches (3) den anderen Hebelarm darstellen.

5. Anordnung nach einem der Ansprüche 1 bis 4, **dadurch gekennzeichnet, dass** der Rastbolzen (6) um eine rechtwinklig sowohl zur Drehachse des Kartenfaches (3) als auch zu einer Flachseite einer in das Kartenfach (3) eingelegten Karte (4, 14) angeordnete Schwenkachse (10) am Kartenfach (3) angelenkt und über zumindest einen in das Kartenfach (3) hineinragenden, durch die einsteckseitig vordere Stirnseite der Karte (4, 14) betätigbaren Stellhebel (12, 13) in eine seiner zumindest zwei dieser Schwenkachse (10) zugeordnete Rastbolzenstellungen verschwenkbar ist.

6. Anordnung nach Anspruch 5, **dadurch gekennzeichnet, dass** an dem Rastbolzen (6) zwei Stellhebel (12, 13) angeformt sind und der Rastbolzen (6) durch die Stellhebel (12, 13) in zwei unterschiedliche Rastbolzenstellungen bringbar ist und dass eine als Codeträger ausgebildete Karte (4) und eine als Dummy ausgebildete Karte (14) durch unterschiedliche Konzeption ihrer einsteckseitigen Stirnseite codiert sind, so dass durch die als Codeträger ausgebildete Karte (4) beim Einschieben in das Kartenfach (3) der eine Stellhebel (12) und durch die als Dummy ausgebildete Karte (14) beim Einschieben in das Kartenfach (3) der andere Stellhebel (13) betätigt werden kann.

7. Anordnung nach Anspruch 5 oder 6, **dadurch gekennzeichnet, dass** der Rastbolzen (6) in seinen unterschiedlichen Rastbolzenstellungen in eine jeweils unterschiedliche Rastkurve (8 bzw. 9) zum Bereitstellen einer unterschiedlichen Schalthaptik beim Durchführen einer Schaltbewegung durch Bewegen des Kartenfaches (3) eingreift.

8. Anordnung nach einem der Ansprüche 1 bis 7, **dadurch gekennzeichnet, dass** die Karten (4, 14) der Anordnung (1) an ihren beiden in Einsteckrichtung in das Kartenfach (3) weisenden Schmalseiten jeweils eine Verriegelungsaussparung (25, 25') aufweisen und dass zum Kartenfach (3) zwei Sperrbolzen (22, 22') dergestalt angeordnet sind, dass jeweils ein Sperrbolzen (22, 22') beim Ausüben einer Schaltbewegung mit dem Kartenfach (3) in eine Verriegelungsaussparung (25, 25') der in das Kartenfach (3) eingelegten Karte (4, 14') eingreift.

9. Anordnung nach einem der Ansprüche 1 bis 8, **dadurch gekennzeichnet, dass** eine der Anordnung (1) zugehörige Karte (4) im Querschnitt spiegelsymmetrisch zur Kartenebene einseitig verdickt ist und dass dem Kartenfach (3) zur Führung der Karte (4) zwei seitliche, den Flachseiten der Karte zugeordnete Führungen mit jeweils einer der Dicke der Karte (4) in ihrem dünneren Bereich (18) entsprechenden lichten Weite aufweisenden Führungsnut (20, 20') zugeordnet sind.

10. Anordnung nach Anspruch 9, **dadurch gekennzeichnet, dass** die beiden Führungsnuten (20 ,20') der seitlichen Führungen jeweils eine mit dem dickeren Bereich (18) der Karte (4) zusammenwirkende Einführschräge aufweisen.

11. Anordnung nach Anspruch 10 in seinem Rückbezug auf Anspruch 8 und 9, **dadurch gekennzeichnet, dass** die Sperrbolzen (22, 22') zum Eingreifen in die Verriegelungsaussparungen (25, 25') der Karte (4, 14) gegen ein die Kraft eines Rückstellelements (24) in Bewegungsrichtung des Kartenfaches (3) beim Ausüben einer Schaltbewegung bewegbar und mit ihrer zur Karte weisenden Oberfläche (23) gestuft ausgebildet sind.

12. Anordnung nach Anspruch 9 oder 10, **dadurch gekennzeichnet, dass** eine als Codeträger ausgebildete Karte einen außermittig zu ihrer Längsachse und mittig zur Längsachse des Kartenfaches angeordneten IR-Sender und/oder IR-Empfänger und die Einrichtung eine mittig in Längsrichtung zum Kartenfach ausgerichtete komplementäre IR-Einrichtung - Empfänger bzw. Sender - aufweist.

13. Anordnung nach einem der Ansprüche 8 bis 12, **dadurch gekennzeichnet, dass** der Einrichtung eine Verriegelungseinrichtung (27) mit Riegeln (29, 29') zugeordnet ist, die in die Verriegelungsaussparungen (25, 25') einer in das Kartenfach (3) eingelegten Karte (4, 14') eingreifen, wenn sich das Kartenfach (3) in seiner NullStellung befindet und systemseitig eine Entnahme der Karte (4, 14) nicht gestattet ist.

14. Anordnung nach Anspruch 13, **dadurch gekennzeichnet, dass** die Riegel (29, 29') durch einen quer zur Einsteckrichtung einer Karte (4, 14) in das Kartenfach (3) betätigbaren Schieber (28) gegen die Kraft eines oder mehrerer Rückstellelemente in ihrer nicht verriegelten Stellung gehalten ist.

15. Anordnung nach einem der Ansprüche 1 bis 14, **dadurch gekennzeichnet, dass** die Einrichtung (2) der Anordnung (1) Teil eines Kraftfahrzeuges ist und die Anordnung (1) als elektronischer Zündanlassschalter dient.

## Claims

1. Arrangement for operating an electrical switch, composed of a card designed as a code carrier (4) or as a dummy (14), and a facility (2) with a card slot (3) for receiving such a card (4, 14), with the card slot (3) pivoted around a rotation axis (D) running parallel to one flat side of the card (4, 14) and a switching operation occurring by pivoting the card slot (3) around its rotation axis (D), and with the facility (2) disposing of an assembly (6, 7) providing switch haptics by means of accomplishing a switching motion by moving the card slot (3), **characterised in that** the rotation axis (D) runs transverse to the longitudinal axis of the card slot (3) and that, once it has been inserted into the card slot (3), the card (4, 14) simultaneously serves as a handle for moving the same.

2. Arrangement in accordance with Claim 1, **characterised in that** the rotation axis (D) of the card slot is located in the vicinity of the insertion end of a card (4, 14) inserted into the card slot (3).

3. Arrangement in accordance with Claim 1 or Claim 2, **characterised in that** the facility (2)-related arrangement that provides switch haptics when a switching motion is accomplished by moving the card slot (3) features a detent pin (6) that engages in a detent gate (7) arranged in a fixed position to enable the switching motion of the card slot (3).

4. Arrangement in accordance with Claim 3, **characterised in that** the detent pin (6) and the card slot (3) together form a rocker on which the detent pin (6) constitutes the one lever arm and the section of the card slot (3) located in front of the rotation axis when viewed from the insertion opening of the card slot (3), constitutes the other lever arm.

5. Arrangement in accordance with any of Claims 1 to 4, **characterised in that** the detent pin (6) is hinged to the card slot (3) around a swivel axis (10) arranged at right angles both to the rotation axis of the card slot (3) as well as to one flat side of a card (4, 14) inserted into the card slot (3) and can be pivoted into one of its at least two detent pin positions allocated to this swivel axis (10) by means of at least one actuating lever (12, 13) protruding into the card slot (3) which can be operated by the front end face on the insertion end of the card (4, 14).

6. Arrangement in accordance with Claim 5, **characterised in that** two actuating levers (12, 13) are integrally formed onto the detent pin (6), and the detent pin (6) can be brought into two different detent pin positions by means of the actuating levers (12, 13), and that a card (4) configured as a code carrier and a card (14) configured as a dummy are coded by means of the differing concept of their front end face on the insertion end in such a way that the one actuating lever (12) can be operated by the card (4) configured as a code carrier when it is inserted into the card slot (3) and the other actuating lever (13) can be operated by the card (14) configured as a dummy when it is inserted into the card slot (3).

7. Arrangement in accordance with Claim 5 or Claim 6, **characterised in that**, in its different detent pin positions, the detent pin (6) engages in a different indexing curve (8, or 9) in each case for the purpose of providing different switching haptics upon a switching motion being accomplished by moving the card slot (3).

8. Arrangement in accordance with any of Claims 1 to 7, **characterised in that** on both of their narrow sides facing in the direction of insertion into the card slot (3), each of the cards (4, 14) of the arrangement (1) has a locking cut-out (25, 25') and that two locking pins (22, 22') are arranged in such a manner in relation to the card slot (3) that, upon carrying out a switching motion with the card slot (3), a locking pin (22, 22') engages in each of the locking cut-outs (25, 25') of the respective card (4, 14') inserted in the card slot (3).

9. Arrangement in accordance with any of Claims 1 to 8, **characterised in that** a card (4) pertaining to the arrangement (1) is thickened on one side in its cross-section mirror-symmetrically to the level of the card and that two lateral guides that are assigned to the flat sides of the card, each having a guide groove (20, 20') with a clear width corresponding to the thickness of the card (4) at its thinnest portion (18), are allocated to the card slot (3) for the purpose of guiding the card (4).

10. Arrangement in accordance with Claim 9, **characterised in that** each of the two guide grooves (20, 20') of the lateral guides has an insertion chamfer that interacts with the thicker portion (18) of the card (4).

11. Arrangement in accordance with Claim 10 in its reference to Claims 8 and 9, **characterised in that** the locking pins (22, 22') for engaging in the locking cut-outs (25, 25') of the card (4, 14) can be moved against the force of a restoring element (24) in the direction of motion of the card slot (3) upon carrying out a switching motion, and are of a stepped design on their surface (23) facing the card.

12. Arrangement in accordance with Claim 9 or Claim 10, **characterised in that** a card designed as a code carrier has an IR transmitter and/or IR receiver located eccentrically to its longitudinal axis and centrically to the longitudinal axis of the card slot and the facility has a complementary IR device - receiver or transmitter - oriented centrically to the card slot in the longitudinal direction.

13. Arrangement in accordance with any of Claims 8 to 12, **characterised in that** a locking device (27) is assigned to the facility with latches (29, 29') which engage in the locking cut-outs (25, 25') of a card (4, 14') inserted in the card slot (3) if the card slot (3) is in its zero position and a removal of the card (4, 14) is not permitted by the system.

14. Arrangement in accordance with Claim 13, **characterised in that** the latches (29, 29') are held in their unlocked position against the force of one or more restoring elements by a slider (28) which can be operated transversely to the direction of inserting a card (4, 14) into the card slot (3).

15. Arrangement in accordance with any of Claims 1 to 14, **characterised in that** the facility (2) of the arrangement (1) is part of a motor vehicle and the arrangement (1) serves as an electronic ignition starter switch.

## Revendications

1. Agencement d'actionnement d'un commutateur électrique comprenant une carte, qui est réalisée en tant que support de code (4) ou en tant que maquette (14), ainsi qu'un dispositif (2) doté d'un réceptacle de carte (3), qui est destiné à recevoir une telle carte (4, 14), le réceptacle de carte (3) étant monté à pivotement autour d'un axe de rotation (D), qui s'étend parallèlement à une face plane de la carte (4, 14), et un actionnement du commutateur étant effectué par un pivotement du réceptacle de carte (3) autour de son axe de rotation (D), et sachant que le dispositif (2) est doté d'un système (6, 7), en retour de force, qui permet une commutation par un mouvement du réceptacle de carte (3) lors de l'exécution d'un mouvement de commutation, **caractérisé en ce que** l'axe de rotation (D) s'étend transversalement par rapport à l'axe longitudinal du réceptacle de carte (3) et que la carte (4, 14), après son introduction dans le réceptacle de carte (3), sert simultanément d'organe de manipulation pour mouvoir celui-ci.

2. Agencement selon la revendication 1, **caractérisé en ce que** l'axe de rotation (D) du réceptacle de carte est disposé dans la zone de l'extrémité d'introduction d'une carte (4, 14) insérée dans le réceptacle de carte (3).

3. Agencement selon revendication 1 ou 2, **caractérisé en ce que** le système, associé au dispositif (2) pour la réalisation d'une commutation en retour de force par un mouvement du réceptacle de carte (3) lors de l'exécution d'un mouvement de commutation, présente un boulon d'arrêt (6), qui s'engage dans une coulisse d'arrêt (7), installée fixement, pour l'exécution d'un mouvement de commutation du réceptacle de carte (3).

4. Agencement selon la revendication 3, **caractérisé en ce que** le boulon d'arrêt (6) et le réceptacle de carte (3) forment en commun une bascule, dans laquelle le boulon d'arrêt (6) représente un bras de levier et la section du réceptacle de carte (3), qui, vue de la fente d'introduction du réceptacle de carte (3), est située en amont de l'axe de rotation, forme l'autre bras de levier.

5. Agencement selon l'une des revendications 1 à 4, **caractérisé en ce que** le boulon d'arrêt (6) est articulé sur le réceptacle de carte (3) autour d'un axe de pivotement (10), qui est disposé à angle droit aussi bien par rapport à l'axe de rotation du réceptacle de carte (3) que par rapport à une face plane d'une carte (4, 14) insérée dans le réceptacle de carte (3), et peut être pivoté dans l'une de ses positions de boulon d'arrêt, associées à cet axe de pivotement (10) et prévues au moins au nombre de deux, par l'intermédiaire d'au moins un levier de réglage (12, 13) en saillie dans le réceptacle de carte (3) et actionnable par le côté frontal d'insertion de la carte (4, 14).

6. Agencement selon la revendication 5, **caractérisé en ce que**, sur le boulon d'arrêt (6) sont formés deux leviers de réglage (12, 13) et que le boulon d'arrêt (6) peut être amené dans deux positions d'arrêt différentes par le levier de réglage (12, 13), et qu'une carte (4), réalisée en tant que support de code, et une carte (14), réalisée en tant que maquette, sont codées par une conception différente de leur coté frontal d'insertion, de sorte que, lors de l'introduction dans le réceptacle de carte (3) l'un des leviers de réglage (12) puisse être actionné par la carte (4) réalisée en tant que support de code et que l'autre levier (13) puisse être actionné par la carte (14) réalisée en tant que maquette, lors de l'introduction dans le réceptacle de carte (3).

7. Agencement selon revendication 5 ou 6, **caractérisé en ce que** le boulon d'arrêt (6), dans ses différentes positions d'arrêt, s'engage chaque fois dans une courbe d'arrêt (8 respectivement. 9) différente pour la réalisation d'une commutation en retour de force différente, lors de l'exécution d'un mouvement de commutation, par un mouvement du réceptacle de carte (3).

8. Agencement selon l'une des revendications 1 à 7, **caractérisé en ce que** les cartes (4, 14) de l'agencement (1) présentent, un évidement de verrouillage (25, 25') sur leurs deux côtés étroits orientés dans la direction d'introduction dans le réceptacle de carte (3), et que deux boulons de blocage (22, 22') sont disposés par rapport au réceptacle de carte (3) de sorte qu'un boulon de blocage (22, 22') s'engage respectivement dans un évidement de verrouillage (25, 25') de la carte (4, 14), introduite dans le réceptacle de carte (3), lors de l'exécution d'un mouvement de commutation avec le réceptacle de carte (3).

9. Agencement selon l'une des revendications 1 à 8, **caractérisé en ce qu'**une carte (4), associée à l'agencement (1) est épaissie unilatéralement, en coupe transversale, en symétrie spéculaire par rapport au plan de la carte, et que, pour le guidage de la carte (4), sont associés au réceptacle de carte (3) deux guides latéraux, qui, associés aux surfaces planes de la carte, sont pourvus chacun d'une rainure de guidage (20, 20'), qui présente une largeur intérieure correspondant à l'épaisseur de la carte (4) dans sa zone la plus mince (18).

10. Agencement selon la revendication 9, **caractérisé en ce que** les deux rainures de guidage (20, 20') des guides latéraux présentent chacun un biseau d'introduction, qui coopère avec la zone la plus épaisse (18) de la carte (4).

11. Agencement selon la revendication 10, se référant aux revendications 8 et 9, **caractérisé en ce que** les boulons de blocage (22, 22'), pour s'engager dans les évidements de verrouillage (25, 25') de la carte (4, 14) peuvent être mus contre la force d'un élément de rappel (24) dans la direction du mouvement du réceptacle de carte (3) lors de l'exécution d'un mouvement de commutation, et que leur surface (23) orientée vers la carte est étagée.

12. Agencement selon revendication 9 ou 10, **caractérisé en ce qu'**une carte réalisée en tant que support de code présente un émetteur IR et / ou un récepteur IR, disposés excentriquement par rapport à son axe longitudinal et centralement par rapport à l'axe longitudinal du réceptacle de carte, et que le dispositif présente une installation IR complémentaire - récepteur, respectivement émetteur -, qui est orientée centralement dans la direction longitudinale par rapport au réceptacle de carte.

13. Agencement selon l'une des revendications 8 à 12, **caractérisé en ce qu'**au dispositif est associé un système de verrouillage (27) comprenant des organes de verrouillage (29, 29'), qui s'engagent dans des évidements de verrouillage (25, 25') d'une carte (4, 14) introduite dans le réceptacle de carte (3), quand le réceptacle de carte (3) est dans sa position zéro, et que le système ne permet pas le retrait de la carte (4, 14).

14. Agencement selon la revendication 13, **caractérisé en ce que** l'organe de verrouillage (29, 29') est maintenu dans sa position non verrouillée en surmontant la force d'un ou de plusieurs éléments de rappel, par un coulisseau (28) actionnable perpendiculairement à la direction d'insertion d'une carte (4, 14) dans le réceptacle de carte (3).

15. Agencement selon l'une des revendications 1 à 14, **caractérisé en ce que** le dispositif (2) de l'agencement (1) est partie composante d'un véhicule automobile et que l'agencement (1) sert de contacteur d'allumage électronique.
